# EUROPEAN PATENT APPLICATION

(11) **EP 2 147 828 A1**
(43) Date of publication of application: **27.01.2010**
(21) Application number: 09166087.8
(22) Date of filing: 22.07.2009
(51) Int. Cl.: B60R 19/34, F16F 7/12, B64G 1/64

(54) **Low shock frangible joint**

(30) Priority: 22.07.2008 US 82689 P
(71) Applicant: Ensign-Bickford Aerospace & Defense Company, Simsbury, CT 06070-0483 (US)
(72) Inventor: Graham, John A., Middletown, CT 06457 (US)
(74) Representative: Delorme, Nicolas

(57) **Abstract**

A frangible joint structure (100,300,400) includes shock attenuation features (110,310,410) formed as an integral part of the joint structure. Shock attenuation is achieved through use of, for example, slots or grooves (110,310,410) that are machined directly, or otherwise formed integrally, into the frangible joint structure (100,300,400). Adequate shock attenuation is achieved solely by the features machined or otherwise formed in the frangible joint together with the typical assembly of the frangible joint into various structures (e.g., as a payload separator for rockets, missiles, satellites, etc.), without the need for additional hardware components and thus without the need for assembly of the frangible joint shock attenuation device.

## Description

### CROSS-REFERENCE TO RELATED APPLICATIONS

This application claims the benefit of U.S. Provisional Application Serial No. 61/082,689, entitled "Low Shock Frangible Joint", filed July 22, 2008, which is incorporated herein by reference in its entirety.

### FIELD OF THE INVENTION

The present invention relates in general to a device that provides for the attenuation of shock, and in particular, to a frangible joint having shock attenuation features formed integrally therein.

### BACKGROUND OF THE INVENTION

Frangible joints of various design configurations are common, for example, those comprising a hollow form extrusion. Also, various devices for shock attenuation are also known, for example, those that include a cylindrical flexible structure having one or more viscoelastic members secured to an outer surface of the cylindrical structure. In this known arrangement, the cylindrical structure has machined features to tune stiffness and shock transmissibility therethrough. The cylindrical structure may be used, for example, as a shock isolation mount between a spacecraft and a launch vehicle.

However, this arrangement suffers from the drawback that additional hardware components beyond the cylindrical structure (i.e., the viscoelastic members along with corresponding outer rigid constraining members secured to the outer surface of each viscoelastic member) are required to achieve the desired amount of shock attenuation between the launch vehicle and the spacecraft.

What is needed is a frangible joint that includes shock attenuation features formed integrally therein, thereby eliminating the need for additional components to achieve the desired amount of shock attenuation.

### SUMMARY OF THE INVENTION

According to an embodiment of the invention, a frangible joint structure includes shock attenuation features formed as an integral part of the joint structure. Shock attenuation is achieved through use of, for example, slots or grooves that are machined directly, or otherwise formed integrally, into the frangible joint structure. Adequate shock attenuation is achieved solely by the features machined or otherwise formed in the frangible joint together with the typical assembly of the frangible joint into various structures (e.g., as a payload separator for rockets, missiles, satellites, etc.), without the need for additional hardware components and thus without the need for assembly of the frangible joint shock attenuation device.

### BRIEF DESCRIPTION OF THE DRAWINGS

The various embodiments of the present invention can be understood with reference to the following drawings. The components are not necessarily to scale. Also, in the drawings, like reference numerals designate corresponding parts throughout the several views.

Figure 1 illustrates a frangible joint having shock attenuation features formed integrally therein in accordance with an embodiment of the invention;

Figure 2, including Figures 2A and 2B, illustrates in perspective the frangible joint of Figure 1 having the shock attenuation features formed integrally therein in accordance with the embodiment of the invention;

Figure 3 illustrates a frangible joint having shock attenuation features formed integrally therein in accordance with another embodiment of the invention; and

Figure 4 illustrates a frangible joint having shock attenuation features formed integrally therein in accordance with yet another embodiment of the invention.

### DETAILED DESCRIPTION OF THE INVENTION

The present invention is more particularly described in the following description and examples that are intended to be illustrative only since numerous modifications and variations therein will be apparent to those skilled in the art. As used in the specification and in the claims, the singular form "a," "an," and "the" may include plural referents unless the context clearly dictates otherwise. Also, as used in the specification and in the claims, the term "comprising" may include the embodiments "consisting of" and "consisting essentially of." Furthermore, all ranges disclosed herein are inclusive of the endpoints and are independently combinable.

As used herein, approximating language may be applied to modify any quantitative representation that may vary without resulting in a change in the basic function to which it is related. Accordingly, a value modified by a term or terms, such as "about" and "substantially," may not to be limited to the precise value specified, in some cases. In at least some instances, the approximating language may correspond to the precision of an instrument for measuring the value.

In an embodiment of the invention, a frangible joint structure includes shock attenuation features formed as an integral part of the joint structure. Shock attenuation is achieved through use of, for example, slots or grooves that are machined directly, or otherwise formed integrally, into the frangible joint structure. Adequate shock attenuation is achieved solely by the features machined or otherwise formed in the frangible joint together with the typical assembly of the frangible joint into various structures (e.g., as a payload separator for rockets, missiles, satellites, etc.), without the need for additional hardware components and thus without the need for assembly of the frangible joint shock attenuation device.

The foregoing and other features of various disclosed embodiments of the invention will be more readily apparent from the following detailed description and drawings of the illustrative embodiments of the invention wherein like reference numbers refer to similar elements.

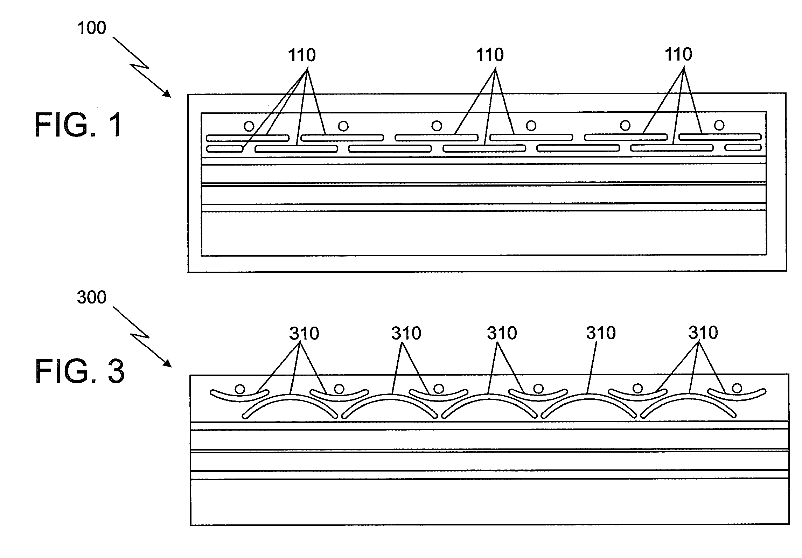

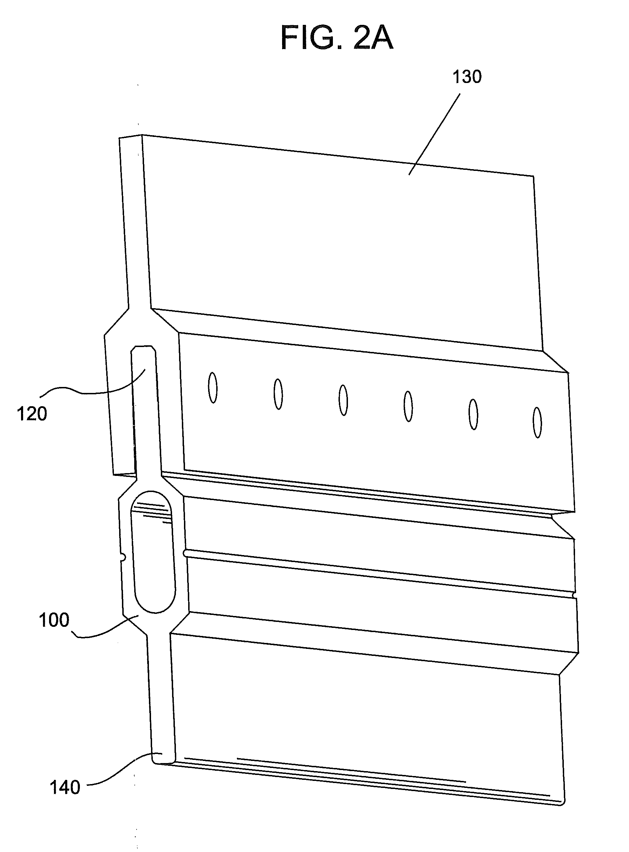

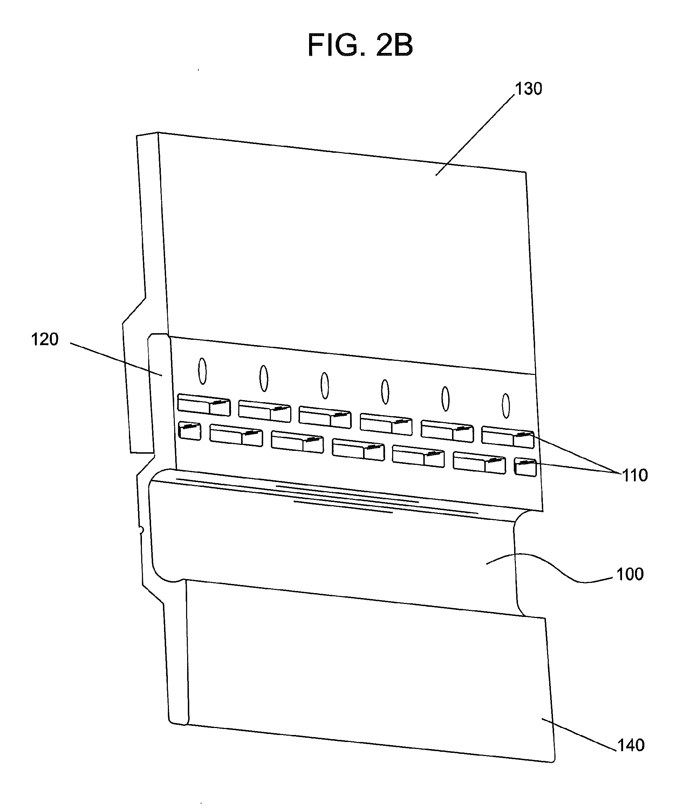

Referring to Figure 1, there illustrated is a frangible joint 100 having a plurality of shock attenuation features formed integrally therein in accordance with an embodiment of the invention. In this embodiment, the frangible joint typically comprises aluminum or other suitable materials, while the shock attenuation features comprise a plurality of slots or grooves 110 machined or otherwise formed in the aluminum frangible joint 100. Referring also to Figure 2, including Figures 2A and 2B, one end 120 of the frangible joint 100 may connect to a structure 130 to be isolated from pyroshock from another component (not shown) connected to the other end 140 of the frangible joint 100. The partial cutaway view of Figure 2B illustrates the slots or grooves 110 that comprise the shock attenuation features that are formed directly in the frangible joint 100. The pattern of slots 110 can be formed on one or both sides of frangible joint 100. The number of rows of slots 110, the number of slots 110 in each row, and the geometry of the slots 110 are tailored to the desired amount of shock attenuation to be achieved.

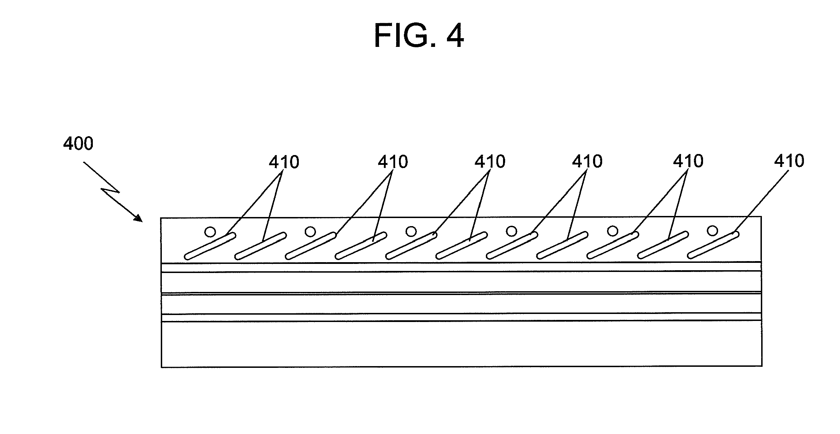

Regarding the geometry of the slots 110, straight, angled and curved slots will have different effects on the amount of shock attenuation achieved by the frangible joint 100 and on the joint load capacity (longitudinal, shear and bending). Thus, referring to Figure 3, there illustrated is a frangible joint 300 having shock attenuation features formed integrally therein in accordance with another embodiment of the invention. In this embodiment, the shock attenuation features comprise a plurality of slots or grooves 310 that are curved, wherein some of the slots or grooves 310 have a convex curve and other slots or grooves 310 have a concave curve. Figure 4 illustrates a frangible joint 400 having shock attenuation features formed integrally therein in accordance with yet another embodiment of the invention. In this embodiment, the shock attenuation features comprise a plurality of slots or grooves 410 that are angled.

The design of the slots or grooves that comprise the shock attenuation features of the invention can be applied to any of the present frangible joint styles (e.g., hollow form extrusion, tongue-in-groove, etc.). The shock attenuation features may be machined directly into frangible joint or formed in some other manner, depending in part upon the material that comprises the frangible joint. An advantage of the frangible joint of the various embodiments of the invention is that no additional components are required - thus, no assembly steps are required.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. All citations referred herein are expressly incorporated herein by reference.

## Claims

1. A frangible joint, comprising:
at least one shock attenuation feature formed directly into the frangible joint.

2. The frangible joint of claim 1, wherein the at least one shock attenuation feature is formed through an entire thickness of the frangible joint.

3. The frangible joint of claim 1, wherein the at least one shock attenuation feature formed directly into the frangible joint comprises a slot.

4. The frangible joint of claim 1, wherein the at least one shock attenuation feature formed directly into the frangible joint comprises a groove.

5. The frangible joint of claim 1, wherein the at least one shock attenuation feature formed directly into the frangible joint comprises one of a slot or groove, wherein the slot or groove is straight.

6. The frangible joint of claim 1, wherein the at least one shock attenuation feature formed directly into the frangible joint comprises one of a slot or groove, wherein the slot or groove is curved.

7. The frangible joint of claim 6, wherein the curved groove has one of a convex curve or a concave curve.

8. The frangible joint of claim 1, wherein the at least one shock attenuation feature formed directly into the frangible joint comprises one of a slot or groove, wherein the slot or groove is angled.

9. A frangible joint, comprising:
at least one shock attenuation feature formed integrally within the frangible joint, wherein the at least one shock attenuation feature attenuates shock based on at least one of a shape of the shock attenuation feature or a geometry of the shock attenuation feature.

10. The frangible joint of claim 9, wherein the at least one shock attenuation feature formed integrally within the frangible joint comprises a slot.

11. The frangible joint of claim 9, wherein the at least one shock attenuation feature formed integrally within the frangible joint comprises a groove.

12. The frangible joint of claim 9, wherein the at least one shock attenuation feature formed integrally within the frangible joint comprises one of a slot or groove, wherein the slot or groove is straight.

13. The frangible joint of claim 9, wherein the at least one shock attenuation feature formed integrally within the frangible joint comprises one of a slot or groove, wherein the slot or groove is curved.

14. The frangible joint of claim 9, wherein the at least one shock attenuation feature formed integrally within the frangible joint comprises one of a slot or groove, wherein the slot or groove is angled.

15. The frangible joint of claim 9, wherein the at least one shock attenuation feature is formed through an entire thickness of the frangible joint.

16. The frangible joint of claim 9, wherein the at least one shock attenuation feature formed directly into the frangible joint comprises a curved groove, wherein the curved groove has one of a convex or a concave curve.

17. A frangible joint, comprising:
at least one shock attenuation feature formed in the frangible joint, wherein the frangible joint is connected with at least one structure.

18. The frangible joint of claim 17, wherein the at least one shock attenuation feature comprises a slot.

19. The frangible joint of claim 17, wherein the at least one shock attenuation feature comprises a groove.

20. The frangible joint of claim 17, wherein the at least one shock attenuation feature comprises a pattern of slots or grooves.
